# EUROPÄISCHE PATENTSCHRIFT

(11) **EP 2 682 713 B1**
(45) Veröffentlichungstag und Bekanntmachung des Hinweises auf die Patenterteilung: **08.04.2020**
(21) Anmeldenummer: 13167841.9
(22) Anmeldetag: 15.05.2013
(51) Int. Cl.: G01B 21/04, G01B 5/012

(54) **Tastsystem und Verfahren zum Betrieb eines Tastsystems**
Sensor system and method for operating same
Système de palpage et procédé destiné au fonctionnement d'un système de palpage

(30) Priorität: 04.07.2012 DE 102012211612
(43) Veröffentlichungstag der Anmeldung: 08.01.2014
(73) Patentinhaber: Dr. Johannes Heidenhain GmbH, 83301 Traunreut (DE)
(72) Erfinder: Gröll, Klaus, 83329 Waging am See (DE); Eisenberger, Christian, 83324 Ruhpolding (DE)

(56) Entgegenhaltungen:
- EP-A1- 2 317 278
- EP-A2- 0 509 677
- DE-A1- 2 558 557
- NETHI S ET AL: "Time and antenna diversity in wireless sensor and actuator networks", COMMUNICATIONS (MICC), 2009 IEEE 9TH MALAYSIA INTERNATIONAL CONFERENCE ON, IEEE, PISCATAWAY, NJ, USA, 15. Dezember 2009 (2009-12-15), Seiten 932-937, XP031648566, ISBN: 978-1-4244-5531-7

## Beschreibung

Die Erfindung betrifft ein Tastsystem, bestehend aus einem Tastkopf mit einem Taststift und einem Sende-Empfängerelement, wobei zwischen Tastkopf und dem Sende-Empfängerelement eine drahtlose Informationsübertragung möglich ist, gemäß dem Oberbegriff des Anspruchs 1. Ferner betrifft die Erfindung ein Verfahren zum Betrieb eines derartigen Tastsystems gemäß dem Anspruch 8.

Ein Tastsystem umfasst in der Regel einen mobilen Tastkopf und ein stationäres Sende-Empfängerelement. Der Tastkopf in Form eines Tastschalters mit einem auslenkbaren Taststift, der bei einer Auslenkung aus seiner Ruheposition oder bei einer Berührung des Taststifts ein Signal abgibt, wird insbesondere zur Positionsbestimmung von Werkstücken verwendet, die in Material bearbeitenden Maschinen, beispielsweise Werkzeugmaschinen, eingespannt sind. Unter der Ruheposition des Taststifts wird dabei eine Position verstanden, in welcher der Taststift keinen Kontakt mit dem anzutastenden Werkstück hat. Bei einem Kontakt des Taststifts mit dem Werkstück wird der Taststift aus seiner Ruheposition ausgelenkt und es wird mittels eines geeigneten Wandlers ein elektrisches Sensorsignal erzeugt, wenn die Auslenkung eine vorgegebene Tastschwelle überschreitet. Das elektrische Sensorsignal wird dann häufig in ein Funksignal umgewandelt, so dass auf diese Weise eine berührungs- und drahtlose Übertragung der Antastinformation an das Sende-Empfängerelement des Tastsystems erreicht wird. In diesem Sende-Empfängerelement werden dann die drahtlos übertragenen Signale wieder in elektrische Signale umgewandelt. Das Sende-Empfängerelement des Tastsystems ist mit einer Auswerteeinheit verbunden, zu der die elektrischen Signale weitergeleitet und ausgewertet werden und schließlich beispielsweise zur Steuerung der Werkzeugmaschine bereitgestellt werden. Dort kann dann, basierend auf der gemessenen Position des betreffenden Werkzeugmaschinenteils, die Position des zu vermessenden Werkstücks bestimmt werden. In diesem Zusammenhang ist es wichtig, dass die entsprechende Information innerhalb eines vorbestimmten Zeitfensters sicher übertragen wird.

Mit einem derartigen Tastkopf kann also beispielsweise die Kontur eines Werkstücks aber auch die Kontur eines Werkzeugs abgetastet werden. Im Falle der Abtastung eines Werkstücks ist der Tastkopf meist beweglich relativ zum Sende-Empfängerelement angeordnet.

Aus der Offenlegungsschrift EP 2317278 A1 ist ein Tastsystem der eingangs genannten Art bekannt, bei dem eine drahtlose Signalübertragung bzw. Informationsübertragung über ein Funksignal offenbart ist.

In der Publikation "Time and Antenna Diversity in Wireless Sensor and Actuator Networks" (PROCEEDINGS OF THE 2009 IEEE 9TH MALAYSIA INTERNATIONAL CONFERENCE ON COMMUNICATIONS (15 - 17 December 2009 Kuala Lumpur), werden Versuchsanordnungen beschrieben, bei denen mehrere Antennen an einem Aktuator oder an einem Sensor zur drahtlosen Kommunikation vorgesehen sind.

Der Erfindung liegt die Aufgabe zu Grunde, ein Tastsystem, bzw. ein Verfahren zum Betrieb eines Tastsystems zu schaffen, durch welches ein sicherer und einfacher Betrieb eines Tastsystems erreicht werden kann.

Diese Aufgabe wird erfindungsgemäß durch die Merkmale des Anspruchs 1 bzw. des Anspruchs 8 gelöst.

Demnach umfasst das Tastsystem einen Tastkopf und ein Sende-Empfängerelement, wobei der Tastkopf einen Taststift und ein Sensorelement aufweist. Durch Berührung des Taststifts ist vom Sensorelement ein Sensorsignal erzeugbar. Der Tastkopf und das Sende-Empfängerelement sind derart konfiguriert, dass zwischen diesen eine Information drahtlos über ein Funksignal übertragbar ist. Dabei weist das Sende-Empfängerelement oder der Tastkopf (ggf. auch das Sende-Empfängerelement und der Tastkopf) zum Empfangen des Funksignals zwei voneinander beabstandete Antennen auf, wobei das Sende-Empfängerelement oder der Tastkopf so konfiguriert sind, dass die über das Funksignal von den beiden Antennen empfangene Information parallel verarbeitbar ist, wobei ein erster Pegel des Funksignals, wie von der ersten Antenne empfangen, ermittelbar ist und ein zweiter Pegel des Funksignals, wie von der zweiten Antenne empfangen, ermittelbar ist und das Tastsystem einen Vergleicher aufweist, durch welchen der erste Pegel mit dem zweiten Pegel vergleichbar ist und durch die zwei Antennen wechselweise Funksignale sendbar sind, so dass das Funksignal von nur einer Antenne sendbar ist, während die andere Antenne stumm ist, wobei die sendende Antenne diejenige Antenne ist, welche den höheren ermittelten Pegel aus dem zuvor durchgeführten Vergleich liefert.

Ein gleichzeitiges Senden der Funksignale ist also nicht vorgesehen.

Demnach ist also der jeweilige empfangene Pegel beider Antennen ermittelbar, so dass entschieden werden kann, welche der Antennen einen besseren Empfang liefert. Diese Antenne ist für das darauffolgende Senden auswählbar. Ein Pegel kann aus dem Logarithmus des Verhältnisses von einer empfangenen Leistung zu einem festen vorbestimmten Leistungswert gebildet sein. Der Begriff Pegel kann aber auch andere Größen meinen, die als Maß für die Stärke des empfangenen Funksignals geeignet sind. In einer bevorzugten Ausgestaltung der Erfindung kann das Sensorelement als ein mechanisch wirkendes Element, etwa als ein Dehnmessstreifen oder als ein Piezoelement ausgestaltet sein oder als ein optisch wirkendes Element, beispielsweise als ein Fotoelement, in einer optischen Anordnung realisiert sein.

Als Funksignale sind Signale zu verstehen, welche in Form von modulierten Funkwellen vorliegen. Das bevorzugte Frequenzband für Funkwellen liegt zwischen 100 MHz und 300 GHz. In vorteilhafter Ausgestaltung weist die Funkwelle eine Frequenz zwischen 500 MHz und 30 GHz auf. Insbesondere können die Funksignale als Datenrahmen bzw. Datenframes ausgestaltet sein gemäß der üblichen Nomenklatur im Zusammenhang mit dem OSI-Schichtenmodell. Unter dem Begriff verarbeitbar kann insbesondere speicherbar oder auswertbar oder bewertbar verstanden werden.

Mit Vorteil ist jede der zwei Antennen mit einer elektronischen Empfängerschaltung verbunden, so dass die empfangene Information parallel in den Empfängerschaltungen verarbeitbar ist. Gemäß einer besonders einfachen Realisierung der Empfängerschaltung kann diese beispielsweise nur als ein Verstärker, ein Filter oder ein Demodulator ausgestaltet sein.

Der Tastkopf und das Sende-Empfängerelement können insbesondere relativ zueinander bewegbar angeordnet sein.

In weiterer Ausgestaltung der Erfindung können die Antennen relativ zueinander schräg angeordnet sein, also nicht entlang paralleler Linien zueinander orientiert sein.

Die Antennen sind gemäß einer bevorzugten Ausgestaltung innerhalb eines geschlossenen Gehäuses angeordnet, wobei das Gehäuse gegenüber der Umgebung dicht ausgestaltet sein kann. Der Abstand der Antennen kann mit Vorteil größer als die halbe Wellenlänge oder gleich der halben Wellenlänge der Funkwellen der Funksignale gewählt werden.

Mit Vorteil sind die elektronischen Empfängerschaltungen auf zwei separaten elektronischen Bausteinen angeordnet, wobei die Bausteine zudem jeweils eine elektronische Senderschaltung umfassen. Insbesondere können die elektronischen Bausteine als Funktransceiver bezeichnet werden. Vorzugsweise sind diese Bausteine separate Chips (integrierte Schaltkreise), insbesondere baugleiche Chips. Die Erfindung beruht insbesondere auf dem Gedanken, dass ein und dasselbe gesendete Funksignal mit einer Frequenz f (z.B. f = 2,4 GHz) von zwei zueinander beabstandeten Antennen parallel bzw. gleichzeitig empfangbar ist. Insbesondere kann die elektronische Senderschaltung derart ausgestaltet sein, dass durch diese während des Betriebes des Tastsystems nur Funksignale auf einer Frequenz sendbar sind. Für den Betrieb des Tastsystems ist keine Synchronisation des Sendebeginns eines Funksignals bzw. Datenrahmens (senderseitig) zu einem etwaigen Empfangsfenster (empfängerseitig) erforderlich. Demnach ist also zwischen dem Tastkopf und dem Sende-Empfängerelement eine Information drahtlos über ein Funksignal unsynchronisiert übertragbar. Dies wird insbesondere dadurch erreicht, dass die Antennen und die dazugehörigen Empfängerschaltungen außerhalb der eigenen Sendezeiten empfangsbereit sind bzw. hören. Als eigene Sendezeiten sind diejenigen Zeitabschnitte zu verstehen, innerhalb welcher von den Antennen Funksignale gesendet werden.

Mit Vorteil ist die Information, die drahtlos über ein Funksignal übertragbar ist, eine Bereitschaftsinformation oder eine Antastinformation. Die Antastinformation gibt Auskunft darüber, ob der Taststift einen zu vermessenden Körper berührt. Insbesondere ist die Information vom Tastkopf zum Sende-Empfängerelement übertragbar, so dass zumindest das Sende-Empfängerelement zum Empfangen des Funksignals zwei voneinander beabstandete Antennen und zugehörige Empfängerschaltungen aufweist.

Die Erfindung betrifft auch ein Verfahren zum Betrieb eines Tastsystems, bei dem zwischen dem Tastkopf und dem Sende-Empfängerelement eine Information über ein Funksignal drahtlos übertragen wird. Dabei weist das Sende-Empfängerelement oder der Tastkopf zum Empfangen des Funksignals zwei voneinander beabstandete Antennen auf, so dass die über das Funksignal von den beiden Antennen empfangene Information parallel verarbeitet wird, wobei ein erster Pegel des Funksignals, wie von der ersten Antenne empfangen, ermittelt wird und ein zweiter Pegel des Funksignals, wie von der zweiten Antenne empfangen, ermittelt wird und der erste Pegel mit dem zweiten Pegel verglichen wird und durch die zwei Antennen wechselweise Funksignale gesendet werden, so dass das Funksignal von nur einer Antenne gesendet wird, während die andere Antenne stumm ist, wobei diejenige Antenne als die sendende Antenne bestimmt wird, welche den höheren ermittelten Pegel aus dem zuvor durchgeführten Vergleich liefert.

Mit Vorteil ist die Information als eine Bereitschaftsinformation oder Antastinformation ausgestaltet und wird insbesondere vom Tastkopf zum Sende-Empfängerelement gesendet.

Jede der zwei Antennen kann mit einer elektronischen Empfängerschaltung verbunden sein, so dass die empfangene Information parallel in den Empfängerschaltungen verarbeitet wird. Verarbeiten kann im Folgenden insbesondere als speichern oder auswerten oder bewerten verstanden werden.

Die Ermittlung der Höhe des jeweiligen empfangenen Pegels bzw. der empfangenen Signalstärke erfolgt vorteilhafterweise im Messbetrieb laufend, insbesondere bei jeder Informationsübertragung.

In weiterer Ausgestaltung des erfindungsgemäßen Verfahrens wird die Sendeleistung für die sendende Antenne in Abhängigkeit der Höhe des zuvor ermittelten Pegels des von derselben Antenne empfangenen Funksignals festgelegt. Dies geschieht in der Weise, dass bei einem vergleichsweise hohen ermittelten Pegel die Sendeleistung reduziert wird.

Zudem kann im Sende-Empfängerelement ein erster Pegel des Funksignals, wie von der ersten Antenne empfangen und ein zweiter Pegel des Funksignals, wie von der zweiten Antenne empfangen, ermittelt werden. Der erste Pegel wird dann mit dem zweiten Pegel verglichen. Es werden dann durch eine Antenne Funksignale zum Tastkopf gesendet, wobei das zum Tastkopf gesendeten Funksignal eine Information über die Größe bzw. den Wert des höheren der ermittelten Pegel beinhaltet. Daraufhin wird die Sendeleistung des Tastkopfes in Abhängigkeit von der Größe des höheren der ermittelten Pegel festgelegt.

Durch das erfindungsgemäße Tastsystem oder Verfahren soll insbesondere eine sichere Übertragung von vergleichsweise wenig Information innerhalb eines definierten Zeitraumes möglich sein. Insbesondere auch dann, wenn der Tastkopf seine Position gegenüber dem Sende-Empfängerelement laufend ändert. Durch die Verwendung von zwei Antennen und Empfängerschaltungen, die parallel arbeiten, ist eine Redundanz, also das mehrfache Vorhandensein derselben Information erreichbar. Die Sicherheit der Übertragung der Information kann weiter gesteigert werden, wenn zusätzlich Signale über Lichtwellen übertragen werden, so dass bei völliger Störung der Funksignale auch eine Übertragung der Information innerhalb des definierten Zeitraumes erfolgt.

Vorteilhafte Ausbildungen der Erfindung entnimmt man den abhängigen Ansprüchen.

Weitere Einzelheiten und Vorteile des erfindungsgemäßen Tastsystems und des erfindungsgemäßen Verfahrens ergeben sich aus der nachfolgenden Beschreibung eines Ausführungsbeispiels anhand der beiliegenden Figuren.

Es zeigen die
- Figur 1: ein Tastsystem in einer Seitenansicht,
- Figur 2: eine Detailansicht eines Tastkopfs mit einem Sensorelement,
- Figur 3: ein Prinzipschaltbild der Sende- und Empfängereinheit des Tastkopfes und des Sende-Empfängerelements,
- Figur 4: ein Tastsystem in einer Seitenansicht in Antastposition.

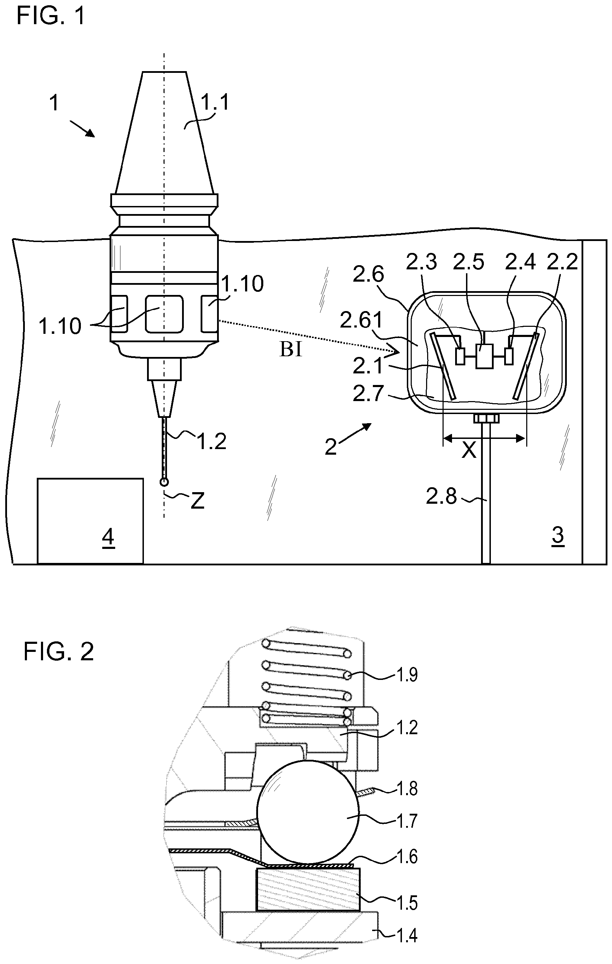

In der Figur 1 ist ein Tastsystem gezeigt, welches einen Tastkopf 1 und ein Sende-Empfängerelement 2 umfasst. Der Tastkopf 1 kann mittels eines Spannkonus 1.1 in eine Spindel einer Werkzeugmaschine eingespannt werden. Die Längsachse Z des Tastkopfs 1 stellt gleichzeitig die Mittelachse des Spannkonus 1.1 dar. Parallel und konzentrisch zur Längsachse Z ist am Tastkopf 1 ein zylindrischer Taststift 1.2 vorgesehen, welcher an einem Ende eine Antastkugel aufweist.

In der Figur 2 ist eine Teilansicht auf das Innere des Tastkopfs 1 gezeigt. Auf einer Leiterplatte 1.4 sind insgesamt drei druckempfindliche Sensorelemente 1.5 platziert, von denen in der Ansicht der Figur 2 nur eines zu sehen ist. Auf der Oberfläche jedes Sensorelements 1.5 ist jeweils eine Membran 1.6 angeordnet, die von jeweils einer Kugel 1.7 berührt wird, wobei die Kugeln 1.7 durch einen Halter 1.8 exakt an einer vorbestimmten Position relativ zu den Sensorelementen 1.5 fixiert werden. Auf jeder Kugel 1.7 ruht ein Arm des Taststifts 1.2, vorgespannt durch jeweils eine Feder 1.9. Zur Energieversorgung des Tastkopfs 1 ist eine, in den Figuren nicht dargestellte, Batterie im Tastkopf 1 angeordnet.

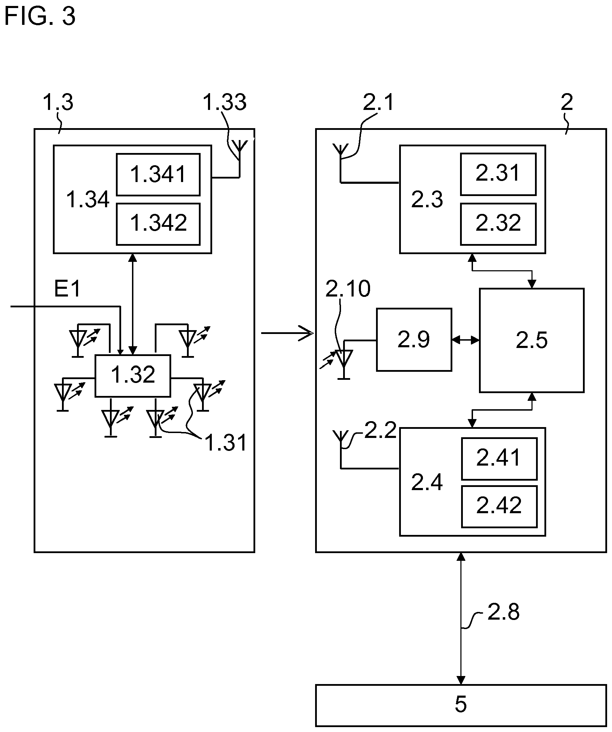

Ferner weist der Tastkopf 1 Fenster 1.10 auf, welche sowohl für Lichtwellen als auch für Funkwellen durchlässig ausgestaltet sind. Innerhalb des Tastkopfs 1 befindet sich gemäß der Figur 3 eine Sende- und Empfängereinheit 1.3. Diese weist Lichtquellen 1.31 auf, die von der Batterie im Tastkopf 1 gespeist werden und über dem Umfang des Tastkopfs 1 versetzt angeordnet sind. Im gezeigten Beispiel sind gemäß der Figur 3 am Tastkopf 1 sechs Lichtquellen 1.31 vorgesehen, die jeweils um 60° versetzt entlang einer Umfangslinie am Tastkopf 1 angeordnet sind. Wie in der Figur 3 schematisch dargestellt, werden die Lichtquellen 1.31 von einer im Tastkopf 1 befindlichen CPU 1.32 angesteuert. Diese können hier Lichtwellen mit einer Wellenlänge von λ_{L} = 880 nm emittieren. Im Übrigen ist der Tastkopf 1 bezüglich Lichtwellen sensorlos ausgestaltet, so dass vom Tastkopf 1 keine Signale, die auf Lichtwellen beruhen, empfangbar sind.

Weiterhin ist im Tastkopf 1 ein Funktransceiver 1.34 angeordnet, welcher eine elektronische Empfängerschaltung 1.341 und eine elektronische Senderschaltung 1.342 aufweist. Der Funktransceiver 1.34 ist als ein einzelner Chip ausgestaltet und mit einer Antenne 1.33 verbunden. Die Antenne 1.33 ist beispielsweise hinter den Fenstern 1.10 als umlaufender Draht im Tastkopf 1 untergebracht.

Das Sende-Empfängerelement 2 ist im vorgestellten Beispiel gemäß der Figur 1 an einem stationären Bauteil 3 der Werkzeugmaschine befestigt. Die Werkzeugmaschine 3 weist einen Bearbeitungsraum auf, der im Wesentlichen durch metallische Wände begrenzt ist. Das Sende-Empfängerelement 2 weist ein Gehäuse 2.6 auf, das ein für Lichtwellen als auch für Funkwellen durchlässiges Fenster 2.61 umfasst. Das Gehäuse 2.6 mit dem Fenster 2.61 ist hermetisch dicht ausgestaltet, so dass Kühl- oder Schmiermittel, die während einer Werkstückbearbeitung im Bearbeitungsraum verwendet werden, nicht in das Innere des Gehäuses 2.6 eindringen können.

Innerhalb eines Gehäuses 2.6 des Sende-Empfängerelements 2 befindet sich hinter dem Fenster 2.61 eine Leiterplatte 2.7, auf der ein optoelektronischer Empfänger 2.10 und zwei weitere Funktransceiver 2.3, 2.4 angeordnet sind (siehe Figur 3). Die Funktransceiver 2.3, 2.4 sind im gezeigten Beispiel als zwei typengleiche Chips ausgestaltet. Sie verfügen jeweils über eine elektronische Empfängerschaltung 2.31, 2.41 und eine elektronische Senderschaltung 2.41, 2.42.

Die elektronische Empfängerschaltungen 2.31, 2.41 umfasst im gezeigten Ausführungsbeispiel eine Impedanz bzw. einen Wechselstromwiderstand, einen Bandpassfilter sowie einen Funkfrequenzverstärker und eine Mischeinrichtung. In den Empfängerschaltungen 2.31, 2.41; 1.341 sind die mit Funkfrequenz ankommenden Signale so verarbeitbar, dass danach elektrische Signale mit niedrigerer Frequenz ausgebbar sind.

Weiterhin sind die Funktransceiver 2.3, 2.4 jeweils mit einer Antenne 2.1, 2.2 verbunden, wobei die Antennen 2.1, 2.2 als elektrisch leitende Strukturen auf der Leiterplatte 2.7 ausgestaltet sind und zueinander beabstandet und zueinander schräg orientiert angeordnet sind. In den vorgestellten Ausführungsbeispielen können die Funktransceiver 2.3, 2.4, 1.34, Funkwellen mit einer Frequenz f_{R} = 2,4 GHz (λ_{R} = 12,5 cm) emittieren und empfangen. Der Abstand X zwischen den Antennen 2.1, 2.2 beträgt im vorgestellten Ausführungsbeispiel 6,3 cm, so dass also die Bedingung X ≈ ½·λ_{R} gilt. Im Allgemeinen ist es vorteilhaft wenn die Antennen 2.1, 2.2 so beabstandet sind, dass gilt: X ≥ ½·λ_{R}. Als Abstand X kann insbesondere der mittlere Abstand X der schräg zueinander orientierten Antennen 2.1, 2.2 definiert werden, bzw. insbesondere der Abstand X zwischen den geometrischen Schwerpunkten der Antennen 2.1, 2.2.

Ferner umfasst das Sende-Empfängerelement 2 einen Analog-Digital-Wandler 2.9 und eine integrierte Schaltung 2.5, z. B. in Form eines FPGA-Elements, das als CPU fungiert. Alternativ kann im Sende-Empfängerelement 2 auch eine Triggerschaltung ggf. mit einem regelbaren Verstärker zum Einsatz kommen.

Durch ein mehradriges Kabel 2.8 ist das Sende-Empfängerelement 2 zu dessen Energieversorgung am Stromnetz angeschlossenen. Überdies ist das Sende-Empfängerelement 2 über das Kabel 2.8 mit einer Folgeelektronik 5, die z. B. eine Numerischen Steuerung sein kann, mit der betreffenden Werkzeugmaschine elektrisch verbunden. Im Ausführungsbeispiel ist im Übrigen eine bidirektionale Datenbusverbindung zwischen dem Sende-Empfängerelement 2 und der Folgeelektronik 5 eingerichtet.

Zunächst wird der Tastkopf 1 beispielsweise in einer Spindel einer Werkzeugmaschine befestigt und dann eingeschaltet, das heißt von einem batterieschonenden Standby-Zustand in den eigentlichen Messbetrieb-Zustand überführt. Um den Tastkopf 1 einzuschalten, wird im Sende-Empfängerelement 2 von der integrierten Schaltung 2.5 ein Befehl an den ersten Funktransceiver 2.3 abgesetzt, welcher ein Senden einer Einschaltinformation bzw. eines Einschaltbefehls über ein Funksignal durch dessen elektronische Senderschaltung 2.32 und die erste Antenne 2.1 zur Folge hat. Dieses Funksignal (Datenrahmen) wird dabei mit voller Leistung abgesetzt. Der zweite Funktransceiver 2.4 ist während dieser Zeit inaktiv, so dass also die zweite Antenne 2.2 dann stumm ist und nicht sendet. Nach dem Absetzen des Einschaltbefehls wird abgewartet ob durch die erste Antenne 2.1 ein vom Tastkopf 1 gesendetes Acknowledge-Signal empfangen wird.

Wie bereits oben erwähnt, wird der Bearbeitungsraum durch metallische Wände begrenzt, so dass Funksignale, welche vom Tastkopf 1 oder vom Sende-Empfängerelement 2 abgesetzt werden, von den Wänden reflektiert werden. Durch Interferenzeffekte ist es nun möglich, dass es zu lokalen Auslöschungen der Funkwellen (Funklöcher) kommt, so dass dort die Funksignale nicht empfangen werden. Ebenso kann durch Störungen anderer Funkquellen eine Übertragung an bestimmten Orten behindert werden.

Aus diesem Grund kann also der Fall eintreten, dass das Übertragen des Funksignals mit der Einschaltinformation über den ersten Funktransceiver 2.3 und die erste Antenne 2.1 fehlschlägt, so dass kein Acknowledge-Signal von der ersten Antenne 2.1 empfangen wird. Nach dem Verstreichen einer vordefinierten Zeitspanne (z. B. 2 ms) wird dann in diesem Fall von der integrierten Schaltung 2.5 ein Befehl an den zweiten Funktransceiver 2.4 abgegeben, wobei dieser Befehl ein Senden eines weiteren Funksignals mit der Einschaltinformation über die Senderschaltung 2.42 und die zweite Antenne 2.2 bewirkt. Bedingt durch den gewählten Abstand zwischen den Antennen 2.1, 2.2 ist es extrem unwahrscheinlich, dass der Tastkopf 1 auch bezogen auf die zweite Antenne 2.2 in einem Funkloch positioniert ist. Demnach wird nun der Tastkopf 1 die Einschaltinformation empfangen, sich einschalten und ein Acknowledge-Signal absetzen. Dieses Acknowledge-Signal ist von der zweiten Antenne 2.2 empfangbar und von der Empfängerschaltung 2.41 des zweiten Funktransceivers 2.4 verarbeitbar. Sofern der Tastkopf 1 im Standby-Zustand nicht permanent empfangsbereit ist, sondern beispielsweise nur während bestimmter Zeitfenster, kann das Funksignal mit der Einschaltinformation zunächst mehrfach wiederholt von ein und demselben Funktransceiver 2.3, 2.4 und zugehöriger Antenne 2.1, 2.2 abgesetzt werden und ggf. danach erst ein Wechsel auf den anderen Funktransceiver 2.3, 2.4 mit der anderen Antenne 2.1, 2.2 vorgenommen werden.

Sobald jedoch der Tastkopf 1 den Einschaltbefehl empfangen und mit dem Acknowledge-Signal quittiert hat, befindet sich dieser im Messbetrieb und wird üblicherweise innerhalb eines Bearbeitungsraumes der Werkzeugmaschine 3 verfahren oder um eine Achse, die orthogonal zur Längsachse Z ausgerichtet ist, geschwenkt.

Vom Funktransceiver 1.34 des Tastkopfes 1 wird im Messbetrieb laufend ein Bereitschaftsignal, welches eine Bereitschaftsinformation BI beinhaltet, an das Sende-Empfängerelement 2 übertragen, um zu signalisieren, dass die Übertragung des Funksignals zum Tastkopf 1 korrekt arbeitet. Die Bereitschaftsinformation BI wird also durch das Bereitschaftsignal, dessen Trägerwelle eine Funkwelle ist, übertragen. Bei Empfang der Bereitschaftsinformation durch das Sende-Empfängerelement 2 wird der Messbetrieb in der Folge aufrechterhalten.

Damit ein einwandfreier Empfang des Funksignals im Sende-Empfängerelement 2 gewährleistet ist, sind im Messbetrieb gleichzeitig beide Antennen 2.1, 2.2 und die dazugehörigen Funktransceiver 2.3, 2.4, insbesondere die dazugehörigen elektronischen Empfängerschaltungen 2.31, 2.41, aktiviert bzw. empfangsbereit.

Wenn also der Tastkopf 1 im Messbetrieb ein Funksignal absetzt, wird dieses von beiden Antennen 2.1, 2.2 empfangen und jeweils den Funktransceivern 2.3, 2.4, insbesondere den dazugehörigen elektronischen Empfängerschaltungen 2.31, 2.41 gleichzeitig zugeführt und dort parallel verarbeitet. Insbesondere wird das von der ersten Antenne 2.1 empfangene Funksignal und dasselbe von der zweiten Antenne 2.2 empfangene Funksignal jeweils in digitale elektrische Signale umgewandelt und es wird zudem jeweils die Signalstärke bzw. der Pegel des empfangen Funksignals ermittelt. Die elektrischen Signale bzw. die entsprechenden Daten werden parallel von den baugleichen Funktransceivern 2.3, 2.4 an die integrierte Schaltung 2.5 weitergeleitet. In der integrierten Schaltung 2.5 wird nun unter anderem verglichen, welches der beiden elektronischen Empfängerschaltungen 2.31, 2.41 einen höheren Pegel des empfangenen Funksignals meldet. Die integrierte Schaltung 2.5 weist dann demjenigen Funktransceiver 2.3, 2.4 mit dem Absetzten eines Acknowledge-Befehls an, welcher die elektronischen Empfängerschaltung 2.31, 2.41 aufweist, welche den höheren Pegel gemeldet hatte. Sollten die Pegel gleich groß sein, wird ein zuvor festgelegter Funktransceiver 2.3, 2.4 aktiviert. Zudem wird aus der Größe bzw. Höhe des empfangenen Pegels durch die integrierte Schaltung 2.5 ermittelt wie groß die erforderliche Sendeleistung für den Acknowledge-Befehl sein muss. Bei hohem empfangenem Pegel wird die Sendeleistung reduziert. Dies hat den Vorteil, dass vom Tastsystem eine minimale Störgefahr für andere funkbetriebene Systeme ausgeht. Mit dem Acknowledge-Befehl sendet das Sende-Empfängerelement 2 auch die Information über die Größe des ermittelten (höheren) Pegels an den Tastkopf 1. Diese Information über den ermittelten Pegel wird dazu genutzt, dass im Tastkopf 1 die Sendeleistung für das nächste Funksignal entsprechend angepasst wird, in einer Weise, dass ein hoher ermittelter Pegel eine Reduzierung der Sendeleistung für das nächste Funksignal zur Folge hat und eine niedriger Pegel eine Erhöhung der Sendeleistung des nächsten Funksignals, das vom Tastkopf 1 abgesetzt wird. Insbesondere kann eine nicht-lineare Anpassung etwa eine logarithmische Anpassung vorgenommen werden, um in besonders hohem Maße den Strombedarf des Tastkopfes 1 zu minimieren. Entsprechend kann die Sendeleistung des Tastkopfes 1 so bestimmt werden, dass der zu erwartende vom Sende-Empfängerelement 2 empfangene Pegel des nächsten Funksignals beispielsweise -75dBm beträgt. Sollte während des Messbetriebs ein Übertragungsfehler auftreten wird das nächste Funksignal wieder mit voller Sendeleistung abgesetzt.

Im Allgemeinen wird die Position des Tastkopfs 1 im Bearbeitungsraum so sein, dass das von den jeweiligen Antennen 2.1, 2.2 empfangene Funksignal nicht den gleichen ermittelten Pegel aufweist. Bei einer ungünstigen Position des Tastkopfes 1 kann es sogar sein, dass eine der Antennen 2.1, 2.2 infolge von Interferenzen kein Funksignal aufnehmen kann. Durch die vorgenommen Dimensionierung des Abstandes X wird aber bei dieser Konstellation dann die andere der Antennen 2.1, 2.2 einen Empfang haben. Die betreffende Antenne 2.1, 2.2 mit ihrem zugehörigen Funktransceiver 2.3, 2.4 wird daraufhin zum Senden eines darauffolgenden Funksignals ausgewählt.

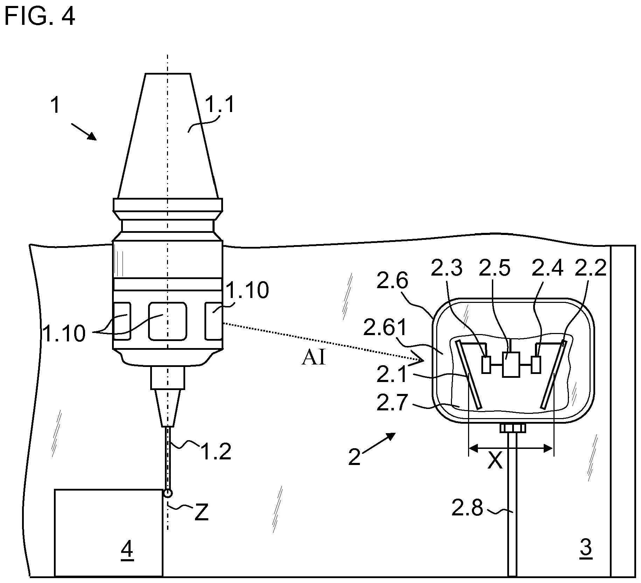

In der Figur 4 ist eine Konstellation dargestellt, in welcher der Taststift 1.2 ein Werkstück 4, welches an einem Aufspanntisch der Werkzeugmaschine 3 befestigt ist, antastet. In dieser Situation wird von den Sensorelementen 1.5 ein elektrisches Sensorsignal E1 erzeugt, das entsprechend eine Antastinformation AI beinhaltet. Das Auftreten des Sensorsignals E1 führt zum Senden eines Lichtsignals und gleichzeitig eines zusätzlichen Funksignals, wobei beide selbstredend ebenfalls die Antastinformation AI beinhalten. Üblicherweise ist bedingt durch die Ausgestaltung der elektronischen Schaltungen das Übertragen der Antastinformation AI durch das Lichtsignal schneller als durch das Funksignal.

Das Lichtsignal mit der Antastinformation AI wird zum Sende-Empfängerelement 2 gesendet und vom optoelektronischen Empfänger 2.10 empfangen. Dort wird das Lichtsignal in ein elektrisches Signal gewandelt, welches im Analog-Digital-Wandler 2.9 digitalisiert und danach der integrierten Schaltung 2.5 zugeführt wird, so dass dann die Antastinformation AI zur Ausgabe an eine Folgeelektronik 5 über das Kabel 2.8 aufbereitet ist.

Parallel wird das Funksignal vom Funktransceiver 1.34 in Verbindung mit der Antenne 1.33 des Tastkopfes 1 abgesetzt. Die Antastinformation AI wird also auch durch das Funksignal zum Sende-Empfängerelement 2 übertragen. Das Funksignal wird von den Antennen 2.1, 2.2 parallel aufgefangen und unabhängig voneinander gelichzeitig von den Funktransceivern 2.3, 2.4, insbesondere von den Empfängerschaltungen 2.31, 2.41 verarbeitet. Insbesondere werden die Pegel des von den Antennen 2.1, 2.2 empfangenen Funksignals bestimmt und die Funksignale in jeweils ein digitales elektrisches Signal umgewandelt.

Nachkommend wird das digitale Signal der integrierten Schaltung 2.5 zugeführt. In der integrierten Schaltung 2.5 wird verglichen, welches der beiden elektronischen Empfängerschaltungen 2.31, 2.41 einen höheren Pegel des empfangenen Funksignals meldet. Die integrierte Schaltung 2.5 weist dann denjenigen Funktransceiver 2.3, 2.4 mit dem Absetzten eines Acknowledge-Befehls an, welcher die elektronischen Empfängerschaltung 2.31, 2.41 aufweist, die den höheren Pegel gemeldet hatte.

Normalerweise benötigt aus übertragungstechnischen Gründen insgesamt die Übertragung der Antastinformation AI auf dem Wege der Funkwellen länger als via Lichtwellen.

Sobald die Antastinformation AI an die Folgeelektronik 5 übertragen ist, wird die Position bestimmt, an welcher die Berührung des Werkstücks 4 erfolgt ist und die Folgeelektronik 5 löst gleichzeitig einen Stopp der Werkzeugmaschine aus, so dass der Tastkopf 1 relativ zum Werkstück 4 nicht mehr bewegt wird. Üblicherweise verfügen Werkzeugmaschinen 3 über genaue Messeinrichtungen, welche die Spindelposition bestimmen, so dass diese Messwerte für die Bestimmung der Berührposition verwendet werden. Normalerweise löst im gezeigten Beispiel die Antastinformation AI, welche via Lichtwellen übertragen wurde, die genannten Maßnahmen in der Folgeelektronik 5 aus. Gleichwohl wird die Antastinformation AI auch über ein Funksignal übertragen zur Bestätigung, dass tatsächlich ein Antastvorgang stattgefunden hat. Es ist demnach das Tastsystem so konfiguriert, dass die Antastinformation AI vom Sende-Empfängerelement 2 an die Folgeelektronik 5 redundant nacheinander ausgebbar ist.

Es kann aber auch vorkommen, dass beispielsweise durch Störungen des Lichtsignals, etwa durch ein opakes Hindernis im Weg der Lichtwellen, die Übertragung der Antastinformation AI über das Lichtsignal fehlschlägt. In diesem Fall kann die über das Funksignal übertragene Antastinformation AI den Stopp und die Messung auslösen. Für diesen Fall ist also nochmals eine erhöhte Betriebssicherheit erreicht, weil ein Stopp der Werkzeugmaschine 3 schon ausgelöst wird, wenn nur eine der beiden Antennen 2.1, 2.2 das Funksignal mit der Antastinformation AI empfängt. Nachdem ein sicherer Messbetrieb auch ohne die Übertragung von Information via Lichtwellen möglich ist, kann zur Vereinfachung des Tastsystems auch auf diese Übertragungsart verzichtet werden.

Neben der beschriebenen Einschaltinformationen, Bereitschaftsinformation BI oder Antastinformation AI sind über Funksignale noch weitere Informationen übertragbar, beispielsweise, Parameterinformationen, Authentifizierungsinformationen oder Einstellungsinformationen.

## Patentansprüche

1. Tastsystem, umfassend einen Tastkopf (1) und ein Sende-Empfängerelement (2), wobei
der Tastkopf (1) einen Taststift (1.2) und ein Sensorelement (1.5) aufweist und durch Berührung des Taststifts (1.2) vom Sensorelement (1.5) ein Sensorsignal (E1) erzeugbar ist, und
der Tastkopf (1) und das Sende-Empfängerelement (2) derart konfiguriert sind, dass zwischen diesen eine Information (AI, BI) drahtlos über ein Funksignal übertragbar ist, **dadurch gekennzeichnet, dass**
das Sende-Empfängerelement (2) oder der Tastkopf (1) zum Empfangen des Funksignals zwei voneinander beabstandete Antennen (2.1, 2.2) aufweist und so konfiguriert ist, dass die über das Funksignal von den beiden Antennen (2.1, 2.2) empfangene Information (AI, BI) parallel verarbeitbar ist, wobei ei
n erster Pegel des Funksignals, wie von der ersten Antenne (2.1) empfangen, ermittelbar ist und
ein zweiter Pegel des Funksignals, wie von der zweiten Antenne (2.2) empfangen, ermittelbar ist und
das Tastsystem einen Vergleicher (2.5) aufweist, durch welchen der erste Pegel mit dem zweiten Pegel vergleichbar ist und
durch die zwei Antennen (2.1, 2.2) wechselweise Funksignale sendbar sind, so dass das Funksignal von nur einer Antenne (2.1) sendbar ist, während die andere Antenne (2.2) stumm ist, wobei di
e sendende Antenne (2.1) diejenige Antenne (2.1) ist, welche den höheren ermittelten Pegel aus dem zuvor durchgeführten Vergleich liefert.

2. Tastsystem gemäß dem Anspruch 1, **dadurch gekennzeichnet, dass** die Antennen (2.1, 2.2) relativ zueinander schräg angeordnet sind.

3. Tastsystem gemäß dem Anspruch 1 oder 2, **dadurch gekennzeichnet, dass** jede der zwei Antennen (2.1, 2.2) mit einer elektronischen Empfängerschaltung (2.31, 2.41) verbunden ist, so dass die empfangene Information (AI, BI) parallel in den Empfängerschaltungen (2.31, 2.41) verarbeitbar ist.

4. Tastsystem gemäß dem Anspruch 3, **dadurch gekennzeichnet, dass** die elektronischen Empfängerschaltungen (2.31, 2.41) auf zwei elektronischen Bausteinen (2.3, 2.4) angeordnet sind, welche zudem jeweils eine elektronische Senderschaltung (2.32, 2.42) umfassen.

5. Tastsystem gemäß einem der vorhergehenden Ansprüche, **dadurch gekennzeichnet, dass** die Antennen (2.1, 2.2) innerhalb eines geschlossenen Gehäuses (2.6) angeordnet sind.

6. Tastsystem gemäß einem der vorhergehenden Ansprüche, **dadurch gekennzeichnet, dass** die Information (AI, BI) als eine Bereitschaftsinformation oder Antastinformation ausgestaltet ist.

7. Tastsystem gemäß einem der vorhergehenden Ansprüche, **dadurch gekennzeichnet, dass** die Information (AI, BI) unsynchronisiert übertragbar ist.

8. Verfahren zum Betrieb eines Tastsystems, umfassend einen Tastkopf (1) und ein Sende-Empfängerelement (2), wobei d
er Tastkopf (1) einen Taststift (1.2) und ein Sensorelement (1.5) aufweist und durch Berührung des Taststifts (1.2) vom Sensorelement (1.5) ein Sensorsignal (E1) erzeugt wird, und
zwischen dem Tastkopf (1) und dem Sende-Empfängerelement (2) eine Information (AI, BI) über ein Funksignal drahtlos übertragen wird, **dadurch gekennzeichnet, dass**
das Sende-Empfängerelement (2) oder der Tastkopf (1) zum Empfangen des Funksignals zwei voneinander beabstandete Antennen (2.1, 2.2) aufweist und so konfiguriert ist, dass die über das Funksignal von den beiden Antennen (2.1, 2.2) empfangene Information (AI, BI) parallel verarbeitet wird, wobei ei
n erster Pegel des Funksignals, wie von der ersten Antenne (2.1) empfangen, ermittelt wird und
ein zweiter Pegel des Funksignals, wie von der zweiten Antenne (2.2) empfangen, ermittelt wird und
der erste Pegel mit dem zweiten Pegel verglichen wird und
durch die zwei Antennen (2.1, 2.2) wechselweise Funksignale gesendet werden, so dass das Funksignal von nur einer Antenne (2.1) gesendet wird, während die andere Antenne (2.2) stumm ist, wobei
diejenige Antenne (2.1) als die sendende Antenne (2.1) bestimmt wird, welche den höheren ermittelten Pegel aus dem zuvor durchgeführten Vergleich liefert.

9. Verfahren zum Betrieb eines Tastsystems gemäß dem Anspruch 8, **dadurch gekennzeichnet, dass** die Information (AI, BI) als eine Bereitschaftsinformation oder Antastinformation ausgestaltet ist und insbesondere vom Tastkopf (1) zum Sende-Empfängerelement (2) gesendet wird.

10. Verfahren zum Betrieb eines Tastsystems gemäß dem Anspruch 8, **dadurch gekennzeichnet, dass** die Sendeleistung für die sendende Antenne (2.1) in Abhängigkeit der Höhe des zuvor ermittelten Pegels des von derselben Antenne (2.1) empfangenen Funksignals festgelegt wird, in der Weise, dass bei hohem ermitteltem Pegel die Sendeleistung reduziert wird.

11. Verfahren zum Betrieb eines Tastsystems gemäß einem der Ansprüche 8 bis 10, **dadurch gekennzeichnet, dass** im Sende-Empfängerelement (2)
ein erster Pegel des Funksignals, wie von der ersten Antenne (2.1) empfangen, ermittelt wird und
ein zweiter Pegel des Funksignals, wie von der zweiten Antenne (2.2) empfangen, ermittelt wird und
der erste Pegel mit dem zweiten Pegel verglichen wird und
durch eine Antenne (2.1, 2.2) Funksignale zum Tastkopf (1) gesendet werden, wobei
das zum Tastkopf (1) gesendeten Funksignal eine Information über die Größe des höheren der ermittelten Pegel beinhaltet und
die Sendeleistung des Tastkopfes (1) in Abhängigkeit von dieser Größe festgelegt wird.

12. Verfahren zum Betrieb eines Tastsystems gemäß einem der Ansprüche 8 bis 11, **dadurch gekennzeichnet, dass** die Information (AI, BI) unsynchronisiert übertragen wird.

## Claims

1. Probe system comprising a probe head (1) and a transceiver element (2), wherein
the probe head (1) has a stylus (1.2) and a sensor element (1.5) and a sensor signal (E1) can be generated by the sensor element (1.5) as a result of contact of the stylus (1.2), and
the probe head (1) and the transceiver element (2) are configured in such a manner that an item of information (AI, BI) can be wirelessly transmitted between them via a radio signal, **characterized in that**
the transceiver element (2) or the probe head (1) has two antennas (2.1, 2.2) arranged at a distance from one another in order to receive the radio signal and is configured in such a manner that the information (AI, BI) received by the two antennas (2.1, 2.2) via the radio signal can be processed in a parallel manner, wherein
a first level of the radio signal received by the first antenna (2.1) can be determined, and
a second level of the radio signal received by the second antenna (2.2) can be determined, and
the probe system has a comparator (2.5) which can be used to compare the first level with the second level, and
radio signals can be alternately transmitted by the two antennas (2.1, 2.2), with the result that the radio signal can be transmitted by only one antenna (2.1), while the other antenna (2.2) is silent, wherein
the transmitting antenna (2.1) is that antenna (2.1) which provides the higher determined level from the comparison which was previously carried out.

2. Probe system according to Claim 1, **characterized in that** the antennas (2.1, 2.2) are arranged obliquely relative to one another.

3. Probe system according to Claim 1 or 2, **characterized in that** each of the two antennas (2.1, 2.2) is connected to an electronic receiver circuit (2.31, 2.41), with the result that the received information (AI, BI) can be processed in a parallel manner in the receiver circuits (2.31, 2.41).

4. Probe system according to Claim 3, **characterized in that** the electronic receiver circuits (2.31, 2.41) are arranged on two electronic modules (2.3, 2.4) which also each comprise an electronic transmitter circuit (2.32, 2.42).

5. Probe system according to one of the preceding claims, **characterized in that** the antennas (2.1, 2.2) are arranged inside a closed housing (2.6).

6. Probe system according to one of the preceding claims, **characterized in that** the information (AI, BI) is in the form of an item of readiness information or probing information.

7. Probe system according to one of the preceding claims, **characterized in that** the information (AI, BI) can be transmitted in an unsynchronized manner.

8. Method for operating a probe system comprising a probe head (1) and a transceiver element (2), wherein
the probe head (1) has a stylus (1.2) and a sensor element (1.5) and a sensor signal (E1) is generated by the sensor element (1.5) as a result of contact of the stylus (1.2), and
an item of information (AI, BI) is wirelessly transmitted between the probe head (1) and the transceiver element (2) via a radio signal, **characterized in that**
the transceiver element (2) or the probe head (1) has two antennas (2.1, 2.2) arranged at a distance from one another in order to receive the radio signal and is configured in such a manner that the information (AI, BI) received by the two antennas (2.1, 2.2) via the radio signal is processed in a parallel manner, wherein
a first level of the radio signal received by the first antenna (2.1) is determined, and
a second level of the radio signal received by the second antenna (2.2) is determined, and
the first level is compared with the second level, and
radio signals are alternately transmitted by the two antennas (2.1, 2.2), with the result that the radio signal is transmitted by only one antenna (2.1) while the other antenna (2.2) is silent, wherein that antenna (2.1) which provides the higher determined level from the comparison which was previously carried out is determined as the transmitting antenna (2.1).

9. Method for operating a probe system according to Claim 8, **characterized in that** the information (AI, BI) is in the form of an item of readiness information or probing information and is transmitted, in particular, from the probe head (1) to the transceiver element (2).

10. Method for operating a probe system according to Claim 8, **characterized in that** the transmission power for the transmitting antenna (2.1) is determined on the basis of the magnitude of the previously determined level of the radio signal received by the same antenna (2.1) in such a manner that the transmission power is reduced in the case of a high determined level.

11. Method for operating a probe system according to one of Claims 8 to 10, **characterized in that**, in the transceiver element (2),
a first level of the radio signal received by the first antenna (2.1) is determined, and
a second level of the radio signal received by the second antenna (2.2) is determined, and
the first level is compared with the second level, and
radio signals are transmitted to the probe head (1) by an antenna (2.1, 2.2), wherein
the radio signal transmitted to the probe head (1) contains an item of information relating to the magnitude of the higher level of the determined levels, and
the transmission power of the probe head (1) is determined on the basis of this magnitude.

12. Method for operating a probe system according to one of Claims 8 to 11, **characterized in that** the information (AI, BI) is transmitted in an unsynchronized manner.

## Revendications

1. Système de palpage comprenant une tête de palpage (1) et un élément émetteur-récepteur (2), dans lequel
la tête de palpage (1) comporte une tige de palpage (1.2) et un élément capteur (1.5), et un signal de capteur (E1) peut être généré par l'élément capteur (1.5) lorsque la tige de palpage (1.2) est touchée, et
la tête de palpage (1) et l'élément émetteur-récepteur (2) sont configurés de telle sorte qu'une information (AI, BI) puisse être transmise entre eux sans fil par le biais d'un signal radio, **caractérisé en ce que** l'élément émetteur-récepteur (2) ou la tête de palpage (1) comporte deux antennes (2.1, 2.2) espacées l'une de l'autre pour la réception du signal radio et est configuré de telle sorte que l'information (AI, BI) reçue par le biais du signal radio par les deux antennes (2.1, 2.2) puisse être traitée en parallèle, dans lequel un premier niveau du signal radio tel que reçu par la première antenne (2.1) peut être déterminé et
un second niveau du signal radio tel que reçu par la seconde antenne (2.2) peut être déterminé et
le système de palpage comporte un comparateur (2.5) qui permet de comparer le premier niveau au second niveau et des signaux radio peuvent être émis alternativement par le biais des deux antennes (2.1, 2.2) de telle sorte que le signal radio ne puisse être émis que par une seule antenne (2.1), tandis que l'autre antenne (2.2) est muette, dans lequel
l'antenne d'émission (2.1) est l'antenne (2.1) qui délivre le niveau déterminé le plus haut selon la comparaison effectuée auparavant.

2. Système de palpage selon la revendication 1, **caractérisé en ce que** les antennes (2.1, 2.2) sont disposées de manière oblique l'une par rapport à l'autre.

3. Système de palpage selon la revendication 1 ou 2, **caractérisé en ce que** chacune des deux antennes (2.1, 2.2) est connectée à un circuit électronique de réception (2.31, 2.41) de telle sorte que l'information reçue (AI, BI) puisse être traitée et parallèle dans les circuits de réception (2.31, 2.41).

4. Système de palpage selon la revendication 3, **caractérisé en ce que** les circuits électroniques de réception (2.31, 2.41) sont disposés sur deux modules électroniques (2.3, 2.4) qui comprennent en outre respectivement un circuit électronique d'émission (2.32, 2.42).

5. Système de palpage selon l'une des revendications. précédentes, **caractérisé en ce que** les antennes (2.1, 2.2) sont disposées à l'intérieur d'un boîtier fermé (2.6).

6. Système de palpage selon l'une des revendications précédentes, **caractérisé en ce que** l'information (AI, BI) se présente sous la forme d'une information de veille ou d'une information de palpage

7. Système de palpage selon l'une des revendications précédentes, **caractérisé en ce que** l'information (AI, BI) peut être transmise de manière non synchronisée.

8. Procédé destiné au fonctionnement d'un système de palpage comprenant une tête de palpage (1) et un élément émetteur-récepteur (2), dans lequel
la tête de palpage (1) comporte une tige de palpage (1.2) et un élément capteur (1.5), et un signal de capteur (E1) est généré par l'élément capteur (1.5) lorsque la tige de palpage (1.2) est touchée, et
une information (AI, BI) est transmise sans fil entre la tête de palpage (1) et l'élément émetteur-récepteur (2) par le biais d'un signal radio, **caractérisé en ce que** l'élément émetteur-récepteur (2) ou la tête de palpage (1) comporte deux antennes (2.1, 2.2) espacées l'une de l'autre pour la réception du signal radio et est configuré de telle sorte que l'information (AI, BI) reçue par le biais du signal radio par les deux antennes (2.1, 2.2) soit traitée en parallèle, dans lequel un premier niveau du signal radio tel que reçu par la première antenne (2.1) peut être déterminé et
un second niveau du signal radio tel que reçu par la seconde antenne (2.2) peut être déterminé et
le premier niveau est comparé au deuxième niveau et
des signaux radio sont émis alternativement par les deux antennes (2.1, 2.2), de telle sorte que le signal radio ne soit émis que par une seule antenne (2.1), tandis que l'autre antenne (2.2) est muette, dans lequel l'antenne (2.1) qui délivre le niveau le plus haut déterminé selon la comparaison effectuée auparavant est déterminée comme étant l'antenne d'émission (2.1).

9. Procédé destiné au fonctionnement d'un système de palpage selon la revendication 8, **caractérisé en ce que** l'information (AI, BI) se présente sous la forme d'une information de veille ou d'une information de palpage et est émise en particulier de la tête de palpage (1) vers l'élément émetteur-récepteur (2).

10. Procédé destiné au fonctionnement d'un système de palpage selon la revendication 8, **caractérisé en ce que** la puissance d'émission de l'antenne d'émission (2.1) est déterminée en fonction de la hauteur du niveau déterminé auparavant du signal radio reçu, par la même antenne (2.1), de telle sorte que la puissance d'émission soit réduite lorsque le niveau déterminé est élevé.

11. Procédé destiné au fonctionnement d'un système de palpage selon l'une des revendications 8 à 10, **caractérisé en ce que**, dans l'élément émetteur-récepteur (2),
un premier niveau du signal radio tel que reçu par la première antenne (2.1) est déterminé et
un second niveau du signal radio tel que reçu par la seconde antenne (2.2) est déterminé et
le premier niveau est comparé au second niveau et
des signaux radio sont émis par le biais d'une antenne (2.1, 2.2) vers la tête de palpage (1), dans lequel le signal radio émis vers la tête de palpage (1) contient une information concernant l'amplitude du plus haut des niveaux détectés et
la puissance d'émission de la tête de palpage (1) est déterminée en fonction de ladite hauteur.

12. Procédé destiné au fonctionnement d'un système de palpage selon l'une des revendications 8 à 11, **caractérisé en ce que** l'information (AI, BI) est transmise de manière non synchronisée.
